# EUROPEAN PATENT SPECIFICATION

(11) **EP 2 072 366 B1**
(45) Date of publication and mention of the grant of the patent: **08.04.2015**
(21) Application number: 08022194.8
(22) Date of filing: 19.12.2008
(51) Int. Cl.: B60W 50/06, G06F 11/00, B60W 50/04, B62D 5/04, G07C 5/08

(54) **Vehicle verification apparatus and vehicle control system using the same**
Fahrzeugprüfvorrichtung und diese verwendendes Fahrzeugsteuersystem
Appareil de vérification de véhicule et système de commande de véhicule l'utilisant

(30) Priority: 20.12.2007 JP 2007329106
(43) Date of publication of application: 24.06.2009
(73) Proprietor: DENSO CORPORATION, Kariya-city, Aichi-pref. 448-8661 (JP)
(72) Inventor: Takeda, Toshihiko, Kariya-city Aichi-pref., 448-8661 (JP)
(74) Representative: Winter, Brandl, Fürniss, Hübner, Röss, Kaiser, Polte - Partnerschaft mbB

(56) References cited:
- EP-A- 1 481 945
- DE-A1-102004 058 359
- DE-A1-102005 044 629
- US-A- 4 497 057
- US-A1- 2007 028 220

## Description

### BACKGROUND OF THE INVENTION

### [Technical Field of the Invention]

The present invention relates to a vehicle verification apparatus for verifying as to the correctness of the behavior control performed by control units with respect to respective controlled objects loaded on the vehicle, and to a vehicle control system using the vehicle verification apparatus.

### [Related Art]

Vehicle control systems have been known as disclosed, for example, in Japanese Patent Laid-Open Publication Nos. 2006-297994, 2004-122943, 2006-290168 and 2005-291173. In such a vehicle control system, the behavior of a controlled object loaded on the vehicle is controlled for every functional domain such as of a drive system or a control system.

This type of vehicle control system requires monitoring malfunction of a control unit which controls a controlled object or the behavior of the controlled object, and taking an adequate measure for the malfunction.

For example, Japanese Patent Laid-Open Publication No. 2004-122943 discloses that a main control unit and a sub-control unit for a steering assist control unit of the power steering mutually monitor malfunction of the other. Japanese Patent Laid-Open Publication No. 2006-290168 discloses that each control unit detects malfunction of itself to carry out failsafe processes according to the traveling environment. Japanese Patent Laid-Open Publication No. 2005-291173 discloses that the control unit determines whether or not the actual acceleration and deceleration of the vehicle is based on the driver's intention and carries out a failsafe process for the power source.

However, such a configuration in which control units that control the behaviors of controlled objects carry out mutual- or self-detection of the malfunction, raises a problem that malfunction cannot be correctly detected when the control units *per se* have malfunction.

Also, in such a configuration, each control *unit per se* is required to hold a complicated redundancy system in order to ensure safety of the control unit.

In addition, document DE 10 2004 058359 A1 relates to a method and system for vehicle movement control in which target values are input into a control process and real measurement values are output by the control process for determination of updated targed values. The control process is modeled and modeled measurement values are determined and compared with the real measurement values. In case of a deviation, the modeled control process is adapted in order to correct inaccuracies in the control process online. In these terms, this document discloses a verification apparatus and a control system in a vehicle provided with a pluralité of target systems to be controlled and a plurality of control units that control operations of the target systems every each of functional domains of the vehicle realized by the target systems respectively, comprising an acquisition unit that acquires behavior information indicative of the behavior of the vehicle, and a verification unit that uses the behavior information to verify correctness of control of the operation of the target systems controlled by the control units.

### SUMMARY OF THE INVENTION

The present invention has been made in order to solve the problem mentioned above, and has as its object to provide a vehicle verification apparatus which is able to verify as to the correctness of the behavior control performed by a control unit for a controlled object and is able to eliminate complication of a redundancy system of each control unit, and to provide a vehicle control system using the vehicle verification apparatus.

According to the present invention, this object is accomplished by a verification apparatus as defined in claim 1, and by a control system as defined in claim 19.

Advantageous further developments of the present invention are subject of the accompanying dependent claims.

According to preferred aspects as defined in the appended claims, a verification unit is provided independent of control units which control the behavior of controlled objects of the respective functional domains. The verification unit verifies as to the correctness of the behavior control performed by the control units, based on the behavior information of the vehicle.

The expression that "a verification unit is provided independent of control units" refers to that the verification unit is isolated from the behavior control performed by the control units, and that the verification function of the verification unit that verifies the behavior control of the control units, is independently provided. This does not necessarily mean that the processor as hardware configuring the verification unit is provided differently and separately from the processor configuring each control unit. For example, at least a portion of each control unit and the verification unit may be configured sharing a single processor. Such a processor may include a CPU as a control unit, as well as a ROM, a RAM or the like as a storage unit.

Thus, not each of the function domain control units, but the verification unit as a third party independent of the control units, can determine as to the correctness of the behavior control performed by the control units from the viewpoint of the system as a whole. Therefore, the correctness, or malfunction, of the behavior control of the control units can be correctly determined. Thus, adequate failsafe processes, such as retreating travel, can be carried out depending on the abnormalities of the behavior control.

For example, a comparison is made with the configuration in which a plurality of control units cooperatively control the same controlled object and the correctness of the behavior control is determined within each of the control units. In contrast, the verification unit entrusted with the verification function for collective verification of the behavior control over the control units, can further reduce the amount of both hardware and software for the verification function.

The verification function for the behavior control of all the control units is entrusted to the verification unit which is independent of the control units. Accordingly, safety can be ensured in the behavior control performed by the control units, without complicating the redundancy system of the control units. Thus, increase can be suppressed in the amount of both hardware and software of each control unit.

In accordance with an aspect that the control units include a first control unit requiring higher safety in controlling the vehicle behavior and a second control unit which accepts lower safety in controlling the vehicle behavior, and that the apparatus is further provided with a storage means that stores common information to the first and second control units and a limiting means that limits changes of the common information from the second control unit to the storage means, unexpected change can be prevented from being given to the common information from the control units which can accept lower safety in vehicle behavior control.

It is also preferred that at least part of the first control unit requiring the higher safety includes means for adjusting control parameter for the behavior control based on pieces of information supplied from the second control unit which can accept the lower safety.

In this case, the conventional system, where malfunction of the control units is detected by the control units *per se,* has suffered from the necessity of raising the level of safety of the control units which can accept the lower safety, in order to ensure the safety of the control units requiring higher safety in vehicle behavior control.

In this regard, in the present invention, the verification unit is entrusted with the verification as to the correctness of the behavior control of the control units which can accept the lower safety, so that a redundancy function can be fulfilled for the control units which can accept lower safety. Thus, the safety level of the control units can be raised, without complicating the redundancy system of the control units which can accept the lower safety. As a result, the safety can be ensured in the control units requiring the higher safety, without increasing the amount of both hardware and software of the control units accepting the lower safety.

Preferably, the verification unit verifiess the correctness of the behavior control directed to one of the targets from the control units.

Thus, in the case where the plurality of control units carry out behavior control with respect to a single controlled object, using different control parameters, detection can be easily made if contradictory pieces of behavior control have been executed for the single controlled object and the pieces of behavior control conflict with each other. Then, the verification unit can command the control units to perform adequate processes to eliminate the conflict between the pieces of behavior control.

It is preferred that the verification unit includes request acquisition means for acquiring information that requests a given behavior of the vehicle, behavior estimation means for estimating the vehicle behavior based on the request, actual behavior detection means for detecting an actual behavior of the vehicle, and determination means for determining whether or not the vehicle behavior is abnormal, by making a comparison between the estimated vehicle behavior and the detected actual behavior of the vehicle.

Thus, if malfunction cannot be determined as having occurred only based on the actual behavior of the vehicle, the comparison between the estimated behavior and the actual behavior can realize the detection of the unexpected mal-behavion (incorrect behavior) of the vehicle. It should be appreciated that the vehicle behavior estimated by the behavior estimation unit may be either normal or abnormal vehicle behavior based on a behavior request. Estimation of either of the normal or abnormal vehicle behaviors can determine the abnormality of the vehicle behavior if the vehicle behavior is compared with the actual behavior.

For example, the behavior estimation means estimates the vehicle behavior based on a physical model that physically models the vehicle.

Thus, estimations of the same accuracy can be made based on each behavior request, irrespective of the value of the behavior request.

For example, the behavior estimation means estimates the vehicle behavior based on a database showing abnormal patterns of the behavior of the vehicle.

The simple operation of making a reference to the database can facilitate the estimation of the vehicle behavior.

It is preferred that the verification unit includes estimation means for estimating the vehicle behavior executed by, of the control units, a specific control unit that performs the behavior control that may be a cause of a detected abnormality in the vehicle behavior, when the determination means determines that the vehicle behavior is abnormal, and block means for blocking the behavior control executed by the specific control unit.

Thus, the control abnormality that would have possibly caused mal-behavior of the vehicle can be promptly blocked within a range of rough estimation based on the mal-behavior. As a result, the vehicle control performed by a certain control unit and would have possibly caused mal-behavior to the vehicle, can be easily prevented from giving adverse effect to other pieces of normal behavior control.

For example, the verification unit includes specification means for specifying the behavior control executed by the specific control unit, in detail more than the behavior control estimated by the estimation means, and the block means blocks the behavior control specified by the specification means and returns the blocked behavior control based on the vehicle behavior estimated by the estimation means.

Thus, the range of behavior control that would cause mal-behavior to the vehicle can be narrowed as much as possible, and the boundary between the normal and abnormal ranges can be made clear. As a result, the portion to be subjected to maintenance can be easily specified.

On the other hand, since the range of normal behavior control can be broadened as much as possible, adequate failsafe processes can be carried out using the behavior control of the normal range.

By way of example, the verification unit includes first determining means for determining whether or not part of the behavior control performed by the plurality of control units that control the behavior of one of the targets is blocked by the block means, second determining means for determining whether or not it is possible to control the behavior of the one of the targets by using the behavior control of a remaining one of the control units which is irrelevant to blocked behavior control, when the first determining means determines that the part of the behavior control is blocked by the block means, and parameter calculation means for calculating control parameters for behavior control that compensate the blocked behavior control, when the second determining means determines that it is possible to control the behavior of the one of the targets.

In this case, the "single controlled object" may refer to one controlled object, or may refer to a plurality of controlled objects of the same kind.

Thus, failsafe control processes of as adequate as possible can be carried out by the non-blocked normal behavior control.

By way of example, a set of units composed of the acquisition unit and the verification unit is provided a plurality of sets, the plurality of sets of units being mounted in the vehicle separately form each other.

Thus, for example, if the verification function of one of two sets is disabled by an accident, for example, the normally functioning other set can continue exerting the verification function.

It is also possible that at least two sets of the plurality of sets of units are powered from redundant power source systems mounted in the vehicle and are formed to communicate through redundant communication systems mounted in the vehicle.

Thus, if malfunction has occurred in either the power source system or the communication system of one set, the verification function can be continued by the other set of the behavior information acquisition unit and the verification unit, which still has a normally functioning power source system and communication system.

It is preferred that each of the plural verification units includes majority-decision determination means that uses both the correctness verified by the plural verification units including each verification itself and the behaviors of the targets controlled by the control units so as to determine if there occurs abnormality in other sets of the verification and control units.

Thus, a determination can be made not only on the malfunction of each control unit, but also on each verification unit.

It should be appreciated that the vehicle behavior may temporarily become abnormal depending on the traveling environment of the vehicle, even when the individual pieces of behavior control are normally performed for the controlled object by the respective control units. This may include a case where, for example, the vehicle travels on a wet road with the cruise control being turned on and goes into a skid with the execution of the fuel cut control.

To take measure for this, the verification unit may include determination means for determining that the vehicle behavior is abnormal and the behavior control performed by the control units is normal, and adjustment means for adjusting the performance of the behavior control based on a priority order for the behavior control so that abnormality of the vehicle behavior is mitigated. For example, information in relation to the priority order is set In the control units.

Thus, the vehicle can travel as safely as possible. Realization of such a process is largely due to the verification unit as a third party which is independent of the control units and verifies as to the correctness of the behavior control of each control unit, based on the vehicle behavior information.

Preferably, the verification apparatus is powered from a power source which is different from a further power source that powers the control units.

Thus, the verification unit can carry out verification processes without being influenced by the possible malfunction of the power source which supplies power to the control units.

Preferably, the verification apparatus further comprises an interface unit connected to a signal line different from a further signal line connected to the control units and formed to supply part of the behavior information to the acquisition unit.

Thus, the verification unit can carry out the verification processes based on the behavior information acquired via the interface unit, without being influenced by the malfunction of the signal system to which the control units are connected.

In addition, the verification unit may be composed of a processor different from processors composing the control units.

Thus, the verification unit can perform calculation, or store and read information, for example, irrespective of the possible malfunction of the processors serving as the control units.

Further, the verification unit may use an algorithm for estimating an amount of the vehicle behavior based on the behavior information and the control units use a further algorithm for calculating an amount of the behavior control given to the targets, the further algorithm being different from the algorithm used by the verification unit.

Thus, when control abnormality is caused by the software in either one of the verification unit or the control units, the other of the verification unit and the control units can be prevented from suffering from the same control abnormality that would be induced therein by the software.

The function of each of the plurality of units provided in the present invention can be realized by a hardware resource whose function is specified by the configuration *per se*, a software resource whose function is specified by the program, or the combination thereof. Also, the function of each of these plurality of units is not limited to the one realized by each of the hardware resources each of which is physically independent of the others.

### BRIEF DESCRIPTION OF THE DRAWINGS

In the accompanying drawings:
Fig. 1 is a block diagram illustrating a vehicle control system according to a first embodiment of the present invention;
Fig. 2 is a block diagram illustrating another mode for supplying power source to an intra-box serving as a processor which operates based on a computer system;
Fig. 3 is a block diagram illustrating an information protection unit;
Fig. 4 is a block diagram illustrating a mal-behavior determination unit and a control block unit;
Fig. 5 is a block diagram illustrating a control parameter calculation unit;
Fig. 6 is a block diagram illustrating a behavior control regulation unit;
Fig. 7 is a flow diagram illustrating an estimation routine for estimating a control abnormality portion of behavior control;
Fig. 8 is a flow diagram illustrating a specification routine for specifying a control abnormality portion of behavior control;
Fig. 9 is a flow diagram illustrating a synthesis routine for synthesizing control parameters;
Fig. 10 is a flow diagram illustrating a priority control routine for behavior control based on a priority order; and
Fig. 11 is a block diagram illustrating a vehicle control system according to a second embodiment of the present invention.

### DETAILED DESCRIPTION OF THE PREFERRED EMBODIMENTS

With reference to the accompanying drawings, hereinafter will be described some embodiments of the present invention.

### [First Embodiment]

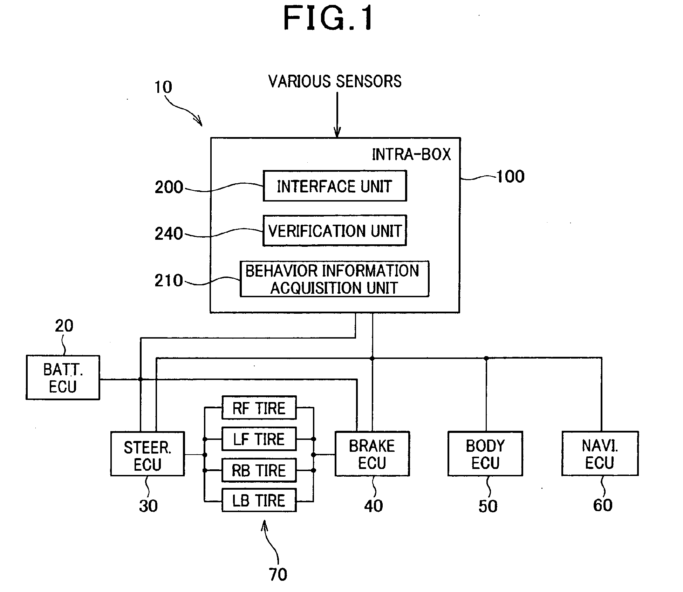

Referring to Figs. 1-10, a first embodiment of the present invention will now be described. Fig. 1 illustrates a vehicle control system using a vehicle verification apparatus according to a first embodiment of the present invention.

A vehicle control system 10 includes a battery ECU (electronic control unit) 20, a steering ECU 30, a brake ECU 40, a body ECU 50, a navigation ECU 60, and a processor called intra-box 100 which operates based on a computer system. The battery ECU 20, the steering ECU 30, the brake ECU 40, the body ECU 50 and the navigation ECU 60 carry out behavior control for the controlled objects, covering the respective functional domains, that is, battery control, steering control, brake control, body control, and navigation control.

The battery ECU 20, the steering ECU 30, the brake ECU 40, the body ECU 50 and the navigation ECU 60 correspond to the control units recited in the claims. The control units control behaviors of targets to be controlled in the vehicle very functional domain stated above. The intra-box 100 corresponds to the vehicle verification apparatus recited in the claims.

Of the control units, the steering ECU 30 and the brake ECU 40, for example, are the units that require the higher safety. The body ECU 50 and the navigation ECU 60 are the units which can accept lower safety than the steering ECU 30 and the brake ECU 40. The categorization of what control unit should be assigned to the units that accepts the lower and requires higher safety is decided in the design stage of vehicles based on a regulation, for instance.

The battery ECU 20 controls a power source that supplies power to the steering ECU 30, the brake ECU 40 and the intra-box 100. The term "controls a power source" associated with the battery ECU 20 here refers, for example, to controlling supply of power from the power source, or controlling electric energy to be stored in the power source, or, when there are power sources having different input/output time characteristics, refers to switching the power sources according to the input/output time characteristics. Power supply to the body ECU 50 and the navigation ECU 60 is controlled by a battery ECU of a different power source system.

As mentioned above, the present embodiment defines the battery ECU 20 as a control unit. However, if the battery ECU 20 simply controls only the supply power, the battery ECU 20 may not correspond to the control unit.

Fig. 1 shows that electric power is supplied by a single power source system to the steering ECU 30, the brake ECU 40 and the intra-box 100. Alternative to this, electric power may be supplied by two power source systems. When two power source systems are used, the battery ECU 20 is provided to each of the systems. In this case, the body ECU 50 and the navigation ECU 60 may be supplied with power from either one of the two systems, or may be supplied with power from a power source system different from the two systems.

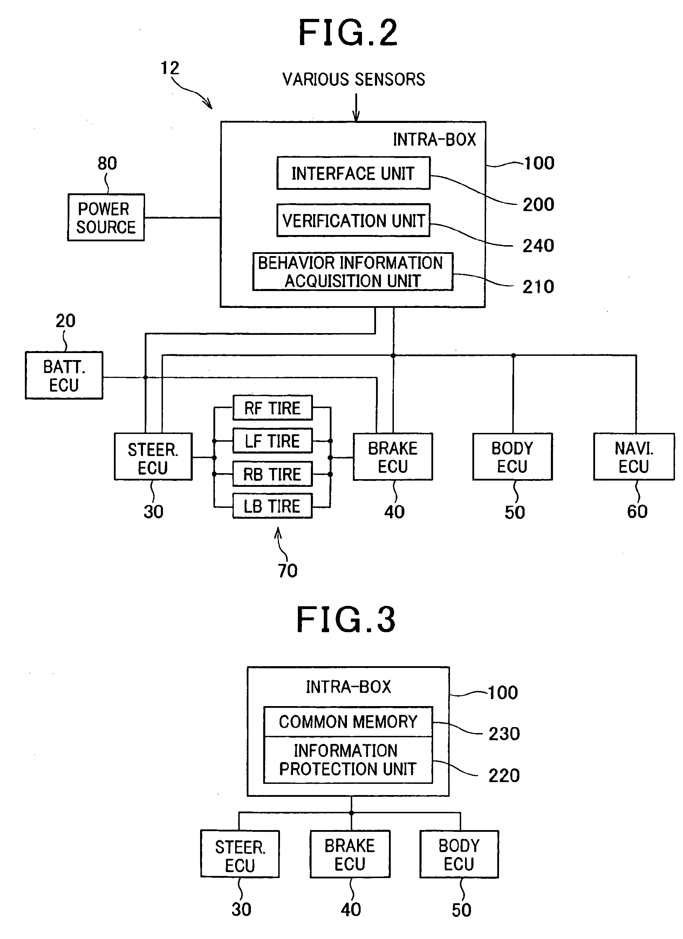

A vehicle control system 12 shown in Fig.2 has a configuration different from the one shown in Fig. 1. In the vehicle control system 12, a power source 80 for supplying power to the intra-box 100 is provided separately from the power source that supplies power to the control units, such as the steering ECU 30 and the brake ECU 40. Specifically, power source systems may be separately provided for the control units and for the intra-box 100. Thus, the intra-box 100 can carry out verification processes irrespective of the occurrence of malfunction in the power source system for the control units.

The power source 80 may be dedicated to the intra-box 100, or may be shared with units other than the control units. If the power source 80 is dedicated to the intra-box 100, the power source 80 and the intra-box 100 may configure the vehicle verification apparatus.

The steering ECU 30 is configured to control the steering angles of tires 70 based on the detection signals from the respective angle sensors that detect the steering angles.

The brake ECU 40 is configured to control the braking operation effected to the tires 70 based on the detection signals from a sensor that detects the stepping operation effected to the brake pedal.

The body ECU 50 is configured to control the vehicle doors, air conditions or the like. The navigation ECU 60 is configured to search a route to a destination to be reached by the vehicle and to guide the vehicle to the destination based, for example, on a satellite positioning system, such as a GPS, and map data.

The intra-box 100 includes an interface unit 200, a behavior information acquisition unit 210, an information protection unit 220 (see Fig. 3) and an verification unit 240. The interface unit 200, the behavior information acquisition unit 210, the information protection unit 220 and the verification unit 240 each include rewritable nonvolatile memories, not shown, such as a CPU, an ROM, an RAM and a flash memory.

Those processors which serve as hardware, such as the CPU, the ROM, the RAM and the flash memory mentioned above configuring the intra-box 100 are independent of the control units.

Thus, if malfunction is caused in the processors of the control units, the intra-box 100 can carry out verification processes without being influenced by these processors of the malfunctioning control units.

Preferably, the algorithm for the intra-box 100 to estimate the amount of vehicle behavior is different from the algorithm for each control unit to calculate the amount of behavior control provided to the controlled object involved. It is also preferable that the intra-box 100 and the control units have a different software specification and different software developing environments. For example, the both may preferably have a different model tool for developing the algorithm, a different tool for producing software, such as a compiler, a different tool for automatically producing code to perform conversion into a machine language from the software, a different designer, and a different design concept.

Thus, when control abnormality is caused by the software in either the intra-box 100 or the control units, the other of the intra-box 100 and the control units can be prevented from suffering from the same control abnormality induced therein by the software.

The interface unit 200 is separately provided from another interface unit (not shown in Figs. 1 and 2) of a communication system, through which the intra-box 100 communicates with each of the control units. The interface unit 200 is supplied with the signals from various sensors through a signal system different from the one to which each of the control units is connected.

Thus, the intra-box 100 can receive detection signals from the various sensors through the interface unit, without being influenced by the possible malfunction of the signal system to which each of the control units is connected.

The signal system to which the interface unit 200 is connected may not be limited to the signal system into which the detection signals of the various sensors are inputted, but may be a communication system, for example, different from the one to which each of the control units is connected.

Thus, the intra-box 100 can transmit/receive data through the communication system different from the one to which each of the control units is connected, without being influenced by the possible malfunction of the communication system to which each of the control units is connected.

A control program that permits the intra-box 100 to function as the following units is stored in a storage unit, such as an ROM and a flash memory, of the intra-box 100.

The behavior information acquisition unit 210 acquires the actual behavior information of the vehicle from the detection signals, for example, from the various sensors, which have been inputted to the interface unit 200.

As shown in Fig. 3, the steering ECU 30 and the brake ECU 40 requiring higher safety as well as the body ECU 50 requiring lower safety can refer to a common memory 230.

However, if the body ECU 50 requiring lower safety is allowed to freely refer to the common memory 230 to rewrite common information stored therein, the safety of the steering ECU 30 and the brake ECU 40 that utilize the common information may not be ensured.

Therefore, for the body ECU 50 requiring lower safety, the information protection unit 220 is adapted to set a reference limitation to allow reading from but inhibit writing into the common memory 230. This limitation can be set with respect to a portion of the storage region of the common memory 230 or the entire storage region of the common memory 230. In this way, safety can be ensured for the steering ECU 30 and the brake ECU 40 requiring higher safety which share information with the body ECU 50 requiring lower safety.

On the other hand, for example, in the storage region into which writing is permitted to the body ECU 50 requiring lower safety, the information written by the body ECU 50 may be read out by the steering ECU 30 or the brake ECU 40 requiring higher safety to regulate the behavior control parameters for the tires 70.

In this case, in the present embodiment, the verification unit 240 verifies the correctness of the behavior control performed by the body ECU 50 to achieve the redundancy function of the body ECU 50. Accordingly, the safety of the body ECU 50 can be enhanced without complicating the redundancy system of the body ECU 50. Thus, the safety of both the steering ECU 30 and the brake ECU 40 requiring higher safety can be ensured without increasing the amount of hardware or software of the body ECU 50.

The verification unit 240 determines as to the correctness of the behavior control for the tires 70 effected by each of the steering ECU 30 and the brake ECU 40, for example, that serve as the control units, based on the vehicle behavior information acquired by the behavior information acquisition unit 210. The verification unit 240 may determine the vehicle behavior as having become abnormal by the behavior control performed by the steering ECU 30 or the brake ECU 40 for the tires 70. In this case, the verification unit 240 concludes that the behavior control performed by the steering ECU 30 or the brake ECU 40 is not normal but abnormal. Then, the verification unit 240 issues a behavior control command to the steering ECU 30 or the brake ECU 40, so that the mal-behavior (i.e., malfunction) of the vehicle can be eliminated.

In this way, the correctness of the behavior control by the control units is determined not by the respective control units, but by the verification unit 240 as a third party independent of the control units. Therefore, the abnormality of the behavior control by the control units can be correctly detected. Accordingly, adequate failsafe processes can be carried out, depending on the abnormal conditions of the behavior control.

Also, since the verification unit 240 independent of the control units is entrusted with the function of collectively verifying (i.e., monitoring, validating, or checking) the behavior control performed by the control units, the safety of the control units can be ensured, without complicating the redundancy system of the conventional control units.

As shown in Fig. 1, the verification unit 240 verifies as to the correctness of the behavior control performed by the steering ECU 30 and the brake ECU 40, i.e. the plurality of control units, for controlling the behavior of the tires 70, i.e. a controlled object. Thus, contradicting pieces of behavior control that would be effected to the tires 70 by the steering ECU 30 and the brake ECU 40, can be readily detected. As a result, the behavior control for the tires 70 performed by the steering ECU 30 and the brake ECU 40 can be regulated to reduce mal-behavior (malfunctioning) of the vehicle.

The verification unit 240 may verify as to the correctness of the behavior control performed by a single control unit which controls the behavior of a single controlled object.

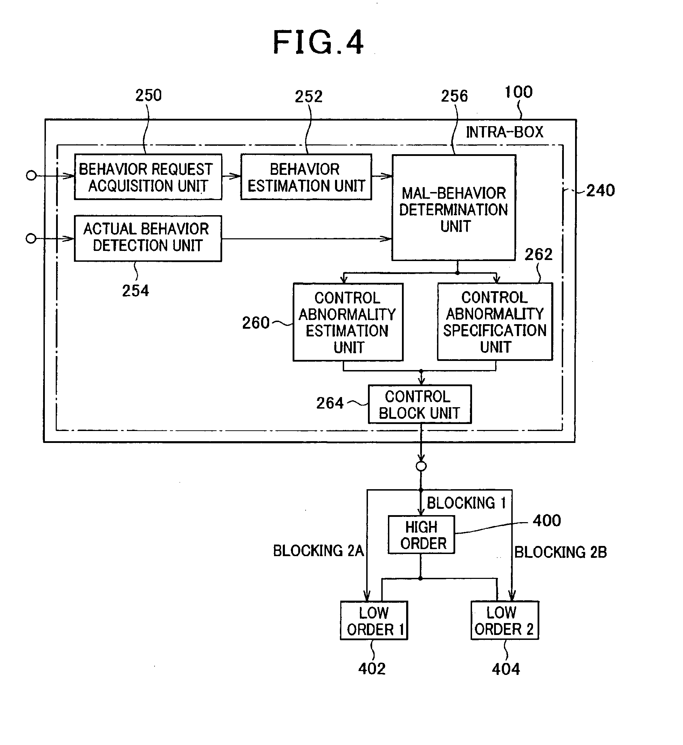

Referring now to Fig. 4, hereinafter are described various units included in the verification unit 240 which verifies the correctness of the behavior control performed by the control units, based on the vehicle behavior, and blocks a abnormal portion of the behavior control. The various units include a behavior request acquisition unit 250, a behavior estimation unit 252, a mal-behavior detection unit 254, a mal-behavior (or malfunction) determination unit 256, a control abnormality estimation unit 260, a control abnormality specification unit 262 and a control block unit 264.

The behavior request acquisition unit 250 is configured to acquire a behavior request for the vehicle based on the drives's operation of the steering wheel, acceleration pedal, brake pedal and the like, or based on the instructions from an operating system such as from the cruise control.

The behavior estimation unit 252 is configured to estimate vehicle behavior based on the behavior request for the vehicle acquired by the behavior request acquisition unit 250. The behavior estimation unit 252 estimates the vehicle behavior using any of the following schemes, for example.

### (1) Use of physical model

The behavior estimation unit 252 uses, as an input value, the behavior request of the vehicle acquired by the behavior request acquisition unit 250 and estimates normal behavior of the vehicle from a preset physical model of the vehicle.

The behavior estimation unit 252 acquires estimated behavior from the physical model, so that the vehicle behavior based on the behavior request can be estimated with the same accuracy, irrespective of the value of the behavior request.

### (2) Use of database

Through simulation, for example, the behavior estimation unit 252 stores in advance abnormal patterns of the vehicle behavior for the behavior requests of the vehicle, In the storage unit, so that the patterns can be used as a database. Then, the behavior estimation unit 252 uses, as an input value, the behavior request and refers to the database to acquire an estimated behavior, i.e. an abnormal pattern of the vehicle behavior. When the input value of the behavior request does not match a reference key for referring to the database, two reference keys are permitted to use an intermediate value, that is the input value of the behavior request, to acquire estimated behavior values. An average value of the acquired estimated behavior values is regarded as an estimated behavior for the input value of the behavior request.

The behavior estimation unit 252 can easily estimate the vehicle behavior with a simple operation of referring to the database.

The patterns for the vehicle behavior to be stored as the database may be normal patterns instead of the abnormal patterns.

An actual behavior detection unit 254 is configured to detect actual vehicle behavior based on the detection signals from the various sensors.

The mal-behavior determination unit 256 is configured to compare the normal or abnormal estimated behavior of the vehicle estimated by the behavior estimation unit 252 with the actual vehicle behavior detected by the actual behavior detection unit 254. In the case of the normal estimated behavior, the vehicle behavior is determined as being abnormal if the direction and amount of the actual behavior are abnormal with respect to the estimated behavior. In the case of abnormal estimated behavior, the vehicle behavior is concluded as being abnormal if the actual behavior matches the estimated behavior. If the vehicle behavior is abnormal, the control unit that has controlled the behavior of the controlled object to produce a malfunction can be determined as being abnormal.

The control abnormality estimation unit 260 is configured to compare the estimated behavior that has been estimated from the physical model or the database with the actual behavior. If the mal-behavior determination unit 256 concludes that the vehicle behavior is abnormal, the control abnormality estimation unit 260 estimates the behavior control of the control unit that might have caused the abnormal vehicle behavior, based on the difference between the estimated behavior and the actual behavior. For example, of a high order 400 and low orders 402 and 404 in Fig. 4, the control abnormality estimation unit 260 estimates, the behavior control on the side of the high order 400 as being a control abnormality portion.

When the mal-behavior determination unit 256 determines the vehicle behavior as being abnormal, the control abnormality specification unit 262 is adapted to acquire a behavior control value for the controlled object and a behavior value corresponding thereto of the controlled object, from the control unit concerned. The control abnormality specification unit 262 may constantly acquire a behavior control value for the controlled object and a behavior value corresponding thereto of the controlled object, irrespective of the results of the determination made by the mal-behavior determination unit 256.

Then, the control abnormality specification unit 262 compares the behavior control value for the controlled object with the behavior value corresponding thereto of the controlled object. The control abnormality specification unit 262 then specifies a behavior control portion under the control of the control unit concerned that might have caused the abnormal vehicle behavior, by more narrowing down the range than done by the control abnormality estimation unit 260. For example, in Fig. 4, the control abnormality specification unit 262 specifies the control abnormality portion of the behavior control, by narrowing down the range from the high order 400 to the low orders 402 and 404.

When abnormality is caused in the vehicle behavior, the control block unit 264 first is adapted to block the behavior control effected to the control abnormality portion (high order 400 of Fig. 4) by the control unit, which portion has been roughly estimated by the control abnormality estimation unit 260. This can promptly remove the influence given by the behavior control that has caused the abnormality in the vehicle behavior, to the remaining normal vehicle control.

Further, the control block unit 264 is configured to block the behavior control of the portions (low orders 402 and 404 of Fig. 4) specified by the control abnormality specification unit 262. At the same time, the control block unit 264 restores the behavior control of the portion (high order 400 of Fig. 4) that has been blocked based on the results of estimation made by the control abnormality estimation unit 260.

Thus, the control block unit 264 is adapted to narrow as much as possible the behavior control range that would cause abnormality in the vehicle behavior, and clarify the border between the normal range and the abnormal range. As a result, the portions to be subjected to maintenance can be easily specified.

Also, since the range of normal behavior control can be broadened as much as possible, adequate failsafe processes can be carried out using the behavior control of the normal range.

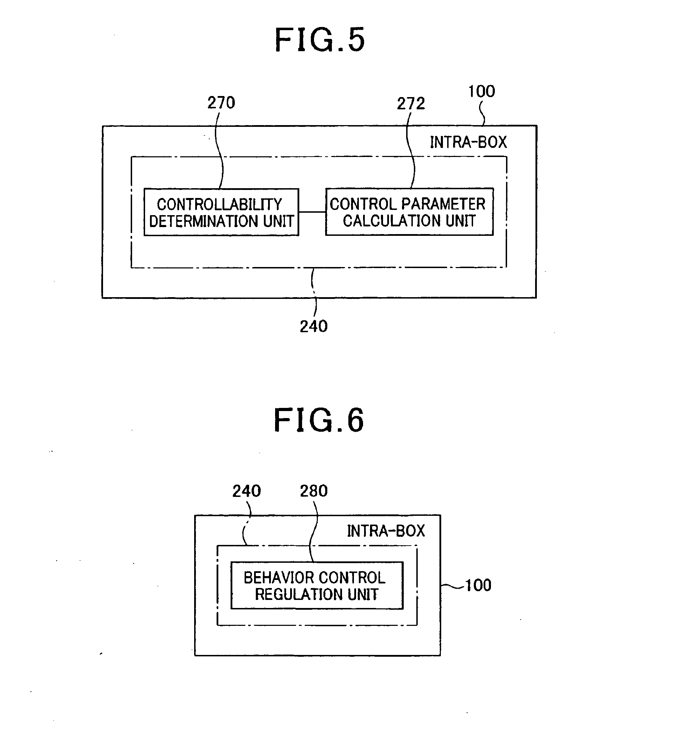

Preferably, the verification unit 240 may not only simply block the behavior control of the control unit that causes abnormality in the vehicle behavior, but may also carry out processes for compensating the behavior control of the blocked portion with normal behavior control, with the aid of a controllability determination unit 270 and a control parameter calculation unit 272 shown in Fig. 5.

There may be a case where a plurality of control units, such as the steering ECU 30 and the brake ECU 40, effect control to the tires 70, a single controlled object. In such a case, the controllability determination unit 270 is adapted to determine whether or not the behavior control for a portion performed by a certain control unit and blocked by the control block unit 264, can be compensated by another normal control unit.

If the controllability determination unit 270 determines that the behavior control for the blocked portion can be compensated by the behavior control of another normal control unit, the control parameter calculation unit 272 is adapted to calculate a control parameter for controlling the behavior of the object to be controlled using the normal control unit, so that the behavior control of the blocked portion can be compensated. Thus, failsafe processes of as adequate as possible, such as retreating travel, can be carried out within the behavior controllable range.

As shown in Fig. 6, the verification unit 240 should desirably be provided with a behavior control regulation unit 280. In this case, the items of behavior control of the plurality of control units are preset with execution order or priority order related to controlled variables.

In the case where the vehicle behavior is abnormal and the behavior control of each of the control units is normal, the behavior control regulation unit 280 is adapted to regulate the execution of the behavior control based on the priority order of the pieces of vehicle control preset in the control units to mitigate the problem encountered.

For example, when the vehicle travels on a wet road with the cruise control being turned on and goes into a skid, fuel cut control may be executed. Thus, even when the individual pieces of behavior control performed by the individual control arse normal, the vehicle behavior may temporarily be abnormal depending on the traveling condition of the vehicle. In such a case, the behavior control regulation unit 280 may contribute to realizing as much a safe travel as possible for the vehicle.

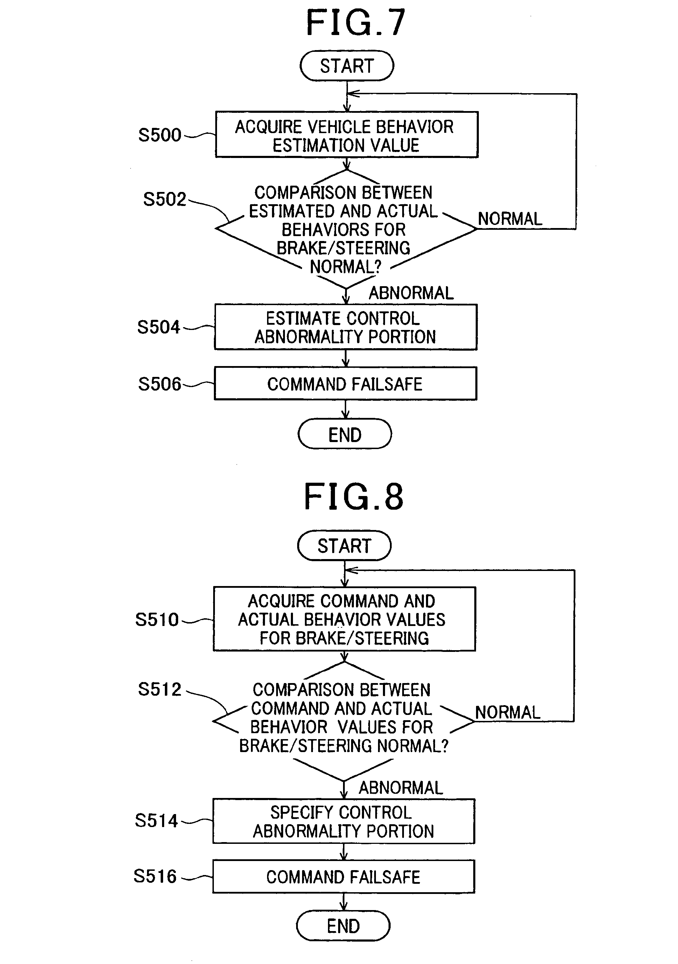

Hereinafter are described verification routines performed by the intra-box 100. Among them, in particular, referring to Figs. 7 to 10, hereinafter are described a control abnormality portion estimation routine, a control abnormality portion specification routine, a control parameter synthesis routine and a priority control routine, with the tires being an object to be controlled.

Fig. 7 shows a control abnormality portion estimation routine which is carried out constantly. At step S500, the intra-box 100 acquires estimated behavior of the tires the physical model of the vehicle or the database of the vehicle behavior described above, using a behavior request for the tires 70 as an input value.

At step S502, the intra-box 100 compares the estimated behavior of the tires 70 with the actual behavior of the tires 70 acquired from the detection signals of the sensors. If the comparison results in as being normal, the intra-box 100 permits the control to return to step S500.

If the comparison results in as being abnormal, the intra-box 100 estimates a control abnormality portion which is under the behavior control of the steering ECU 30 or the brake ECU 40 that has induced the mal-behavior of the tires 70.

Then, at step S506, the intra-box 100 blocks the behavior control of the portion (e.g., high order 400 of Fig. 4) estimated at step 5504 and commands the steering ECU 30 and the brake ECU' 40 to perform adequate fallsafe processes using the behavior control that has been estimated as being normal.

Fig. 8 shows a control abnormality portion specification routine which is either executed in parallel with the control abnormality portion estimation routine shown in Fig. 7, or executed if abnormality results in at step S502 of the control abnormality estimation routine of Fig. 7.

At step S510, the intra-box 100 acquires command values of the behavior control performed by the steering ECU 30 and the brake ECU 40 for the tires 70, as well as actual behavior values of the tires 70 derived from the detection signals of the sensors.

At step S512, the intra-box 100 compares the command values of the behavior control for the tires 70 with the actual behavior values to determine as to the abnormality of the behavior of the tires based on the difference resulting from the comparison. If the behavior is determined as being normal, the intra-box 100 permits the control to return to step S510.

If the behavior is determined as being abnormal, the intra-box 100 more narrows down, for specification, step S514, the control abnormality portion which is under the control of the steering ECU 30 or the brake ECU 40 than in the control abnormality portion estimation routine, based on the difference between the command values of the behavior control and the actual behavior value.

At step 5516, the intra-box 100 blocks the behavior control of the portions (e.g., low orders 402 and 404 of Fig. 4) specified at step S514. At the same time, the intra-box 100 releases the blocking of the behavior control of the portion (e.g., 400 of Fig. 4), which blocking has been effected in the control abnormality portion estimation routine. Then, the intra-box 100 commands the steering ECU 30 and the brake ECU 40 to carry out adequate failsafe processes using the behavior control that has been estimated as being normal.

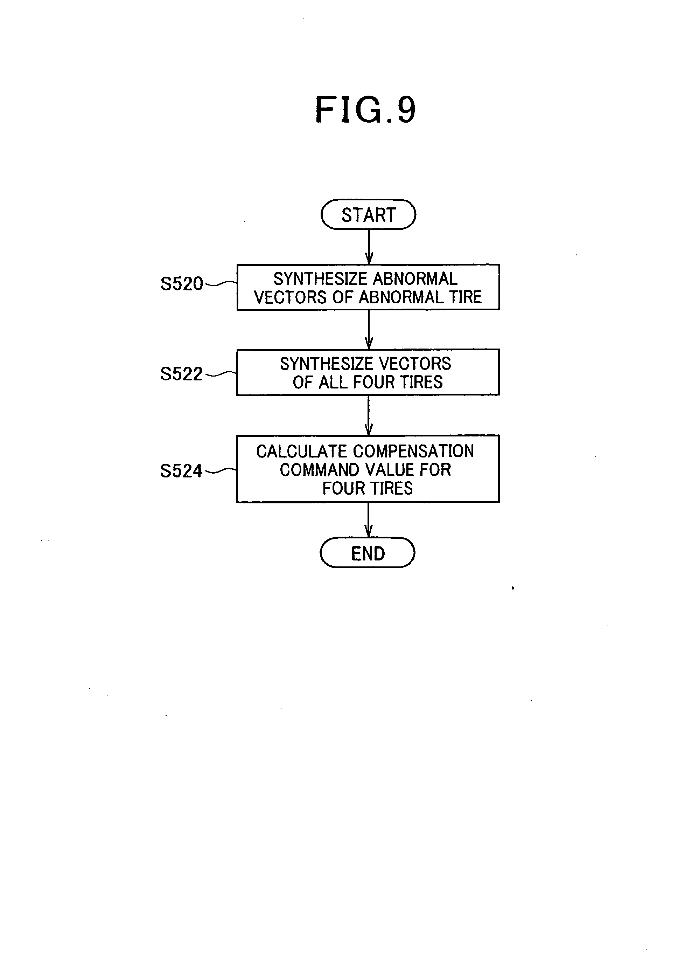

Fig. 9 shows the control parameter synthesis routine for the case where the behavior of a portion of the four tires is abnormal. The parameter synthesis routine shown in Fig. 9 is executed when mal-behavior occurs in the tires 70.

When mal-behavior is caused in any one of the tires 70, the intra-box 100 synthesizes, at step S520; control vectors (control parameters) of the remaining pieces of behavior control after blocking the behavior control of the steering ECU 30 and the brake ECU 40 over the control abnormality portion for the tire 70 in question.

At step S522, the intra-box 100 synthesizes the control vectors of the behavior control for the tires 70 Where mal-behavior has not been caused, and the control vectors which have been synthesized at step S520 for the tire 70 in question where mal-behavior has been caused.

At step S524, the intra-box 100 calculates a control parameter for the tires 70 based on the synthetic value of the control vectors for the four tires, which have been synthesized at step S522, so that the behavior control for the normal three tires 70 can compensate the behavior control for the abnormal one tire 70, for safe steering and braking of the four tires 70 to ensure safe travel of the vehicle.

The steering ECU 30 and the brake ECU 40 controls the behavior of the tires 70, based on the controls parameter calculated by the intra-box 100.

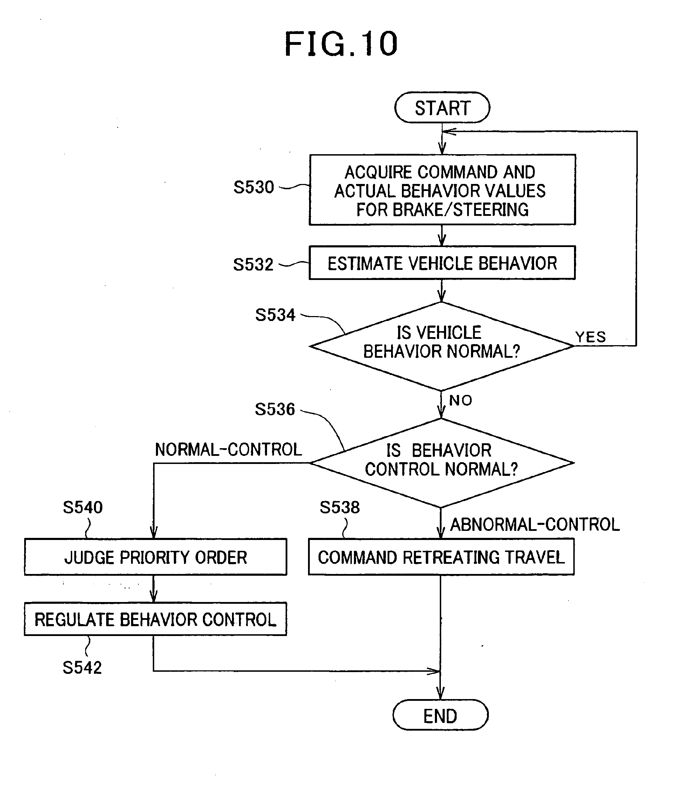

Fig. 10 shows the priority control routine which is used for the abnormality not assumed In the physical model or the database. Specifically the priority control routine is used for the case where the vehicle behavior is abnormal but the behavior control performed by each of the control units is normal. Each of the control units is preset with execution order or priority order for controlled variables In performing the behavior control. The priority control routine shown in Fig. 10 is constantly executed.

At step S530, the intra-box 100 acquires command values of the behavior control performed by the steering ECU 30 and the brake ECU 40 as well as actual behavior values of the tires 70 derived from the detection signals of the sensors.

At step S532, the intra-box 100 estimates the vehicle behavior based on the command values of the behavior control for the tires 70.

At step S534, the intra-box 160 compares the command values of the behavior control for the tires 70 with the actual behavior values to determine as to the of the behavior of the tires based on the difference resulting from the comparison. If the behavior is determined as being normal, the infra-box 100 permits the control to return to step S530.

If the behavior of the tires 70 is determined as being abnormal, the intra-box 100 determines, at step S536, whether the behavior control for the tires 70 is normal or abnormal.

If the behavior of the tires 70 is abnormal because of the abnormality of the behavior control, the intra-box 100 blocks, at step S538, the behavior control of the control abnormality portion, for example, to execute failsafe processes, such as retreating (reversing) travel, using the behavior control of the normal-control portion.

If the behavior of the tires 70 is abnormal in spite of the fact that the behavior control for the tires 70 is normal, the intra-box 100 determines that unexpected malfunction has occurred. Then, the intra-box 100 judges, at step S540, the preset priority order to have the vehicle traveled safely.

At step S542, the intra-box 100 regulates the behavior control performed by the steering ECU 30 and the brake ECU 40, based on the priority order to mitigate the mal-behavior of the vehicle. Thus, the vehicle can travel as safely as possible.

### [Second Embodiment]

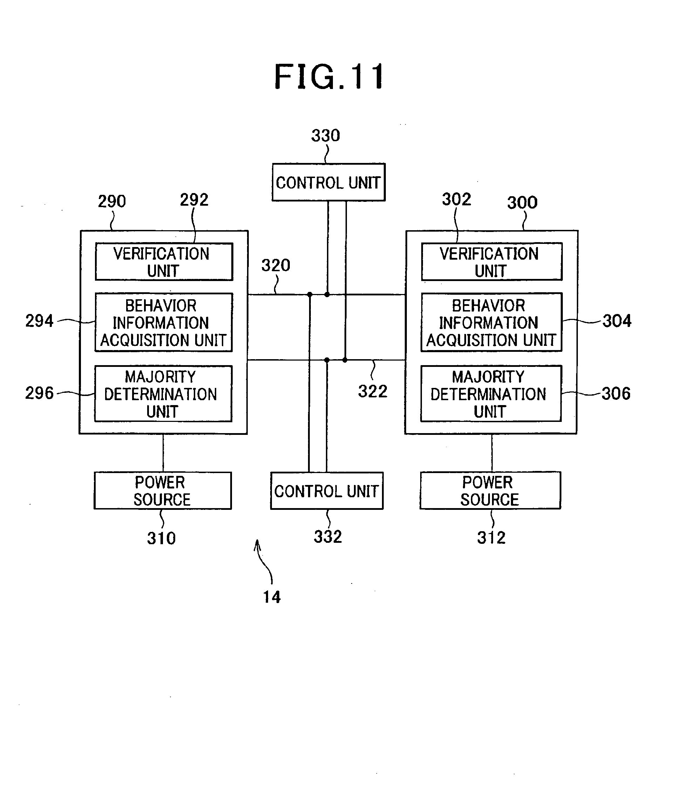

With reference to Fig. 11, hereinafter is described a vehicle control system using a vehicle verification apparatus according to a second embodiment of the present invention. In a vehicle control system 14 according to the second embodiment, a vehicle verification apparatus is configured by a plurality of intra-boxes 290, 300, rather than a single intra-box.

In Fig. 11, the two intra-boxes 290, 300 are disposed in the vehicle being distanced from each other. The intra-box 290 is disposed at the front of the vehicle to chiefly control the behavior of the controlled objects located at the front of the vehicle. The intra-box 300 is disposed at the rear of the vehicle to chiefly control the behavior of the controlled objects located at the rear of the vehicle. The intra-boxes 290, 300 include verification units 292, 302, behavior information acquisition units 294, 304, and majority determination units 296, 306, respectively.

Thus, if one of the intra-boxes has been damaged by an accident and disabled, the other intra-box that has remained intact can monitor the correctness of the behavior control performed by the control units.

The intra-boxes 290, 300 are supplied with power by different power sources 310, 312, respectively. Also, the intra-boxes 290, 300 as well as control units 330, 332 are connected, respectively, to different communication systems 320, 322. By way of the different communication systems 320, 322, each of the intra-boxes 290, 300 communicates with the other of the intra-boxes as well as the control units 330,332 connected to the communication systems 320,322. If the safety request for the control units 330, 332 is low, the control units 330, 332 may be connected to either one of the communication systems 320, 322.

Thus, if either one of the power sources 310, 312 configuring the redundancy system is disabled, or if either one of the communication systems 320, 322 Is disabled, the intra-box can carry out verification processes using the remaining system.

The majority determination units 296, 306 determine, by majority vote, as to the correctness of control performed by the verification units 292, 302 of the two intra-boxes 290, 300 and by the control units, based on the results of the verification made by the verification units 292, 302 and the results of the verification made by at least one control unit.

### [Other Embodiments]

In the embodiments described above, the vehicle control system has been provided with a plurality of control units. Alternative to this, a vehicle control system may have a single control unit. This system can also use the same intra-box as in the case of the plurality of control units to realize the verification processes.

In the embodiments described above, the intra-boxes and the control units have been configured by different processors. Alternative to this, the control units and at least a portion of the verification unit of the intra-box may be configured sharing a single processor. In this case as well, the verification function of the verification unit that verifies the behavior control performed by the control units is provided, being separate from or independent of the behavior control performed by the control units.

The present invention may be embodied in several other forms without departing from the scope thereof. The embodiments and modifications described so far are therefore intended to be only illustrative and not restrictive, since the scope of the invention is defined by the appended claims rather than by the description preceding them. All changes that fall within the bounds of the claims are therefore intended to be embraced by the claims.

## Claims

1. A verification apparatus (100, 290, 300) mounted in a vehicle provided with a plurality of controlled objects and a plurality of control units (20, 30, 40, 50, 60), the control units being associated with respectively different functional domains and being adapted to control behaviors of the controlled objects with respect to the respectively associated functional domains, the apparatus comprising:
an acquisition unit (210, 294, 304) that acquires behavior information indicative of an actual behavior of the vehicle; and
a verification unit (240, 292, 302) that uses the behavior information to verify correctness of behavior control for the controlled objects performed by the control units,
**characterized in that**
the plurality of control units include a first control unit (30, 40) that requires higher safety in controlling a behavior of the vehicle and a second control unit (50, 60) that accepts lower safety in controlling a behavior of the vehicle, the apparatus further comprising:
storage means (230) that stores information common to the first and second control units; and
limiting means (220) that inhibits the second control unit (50, 60) from writing the common information into the storage means.

2. The verification apparatus (100, 290, 300) of claim 1, wherein the verification unit (240, 292, 302) verifies the correctness of the behavior control directed to one of the controlled objects from the control units.

3. The verification apparatus (100, 290, 300) of claim 1, wherein the verification unit (240, 292, 302) includes:
request acquisition means (250) for acquiring a behavior request for the vehicle,
behavior estimation means (252) for estimating a behavior of the vehicle based on the behavior request,
actual behavior detection means (256) for detecting an actual behavior of the vehicle, and
determination means (256) for determining whether or not the behavior of the vehicle is abnormal by making a comparison between the estimated behavior of the vehicle and the detected actual behavior of the vehicle.

4. The verification apparatus (100, 290, 300) of claim 3, wherein the behavior estimation means (252) estimates the behavior of the vehicle based on a physical model that physically models the vehicle.

5. The verification apparatus (100, 290, 300) of claim 3, wherein the behavior estimation means (252) estimates the behavior of the vehicle based on a database showing an abnormal pattern of the behavior of the vehicle.

6. The verification apparatus (100, 290, 300) of claim 3, wherein the verification unit (240, 292, 302) includes:
estimation means (260) for, when it is determined by the determination means (256) that the behavior of the vehicle is abnormal, estimating behavior control of a specific control unit of the plurality of control units that has a possibility of causing an abnormality in the behavior of the vehicle, on the basis of a difference between the estimated behavior of the vehicle from the behavior estimation means (252) and the detected actual behavior of the vehicle from the actual behavior detection means (254); and
block means (264) for blocking the behavior control of the specific control unit.

7. The verification apparatus (100, 290, 300) of claim 6, wherein
the verification unit (240, 292, 302) includes
specification means (262) for, when it is determined by the determination means (256) that the behavior of the vehicle is abnormal, specifying a portion of the behavior control of the specific control unit, the portion being likely to have caused the abnormality in the behavior of the vehicle, by making a comparison between a behavior control value for a controlled object controlled by the specific control unit and a behavior value corresponding thereto of the controlled object, and
the block means (264) blocks the portion of the behavior control of the specific control unit and restores, except the portion, the blocked behavior control of the specific control unit.

8. The verification apparatus (100, 290, 300) of claim 7, wherein the verification unit (240, 292, 302) further includes:
controllability determination means (270) for determining whether or not the portion of the behavior control of the specific control unit, blocked by the block means (264), can be compensated by the behavior control of the other control units, and
parameter calculation means (272) for, when it is determined by the controllability determination means (270) that the blocked portion of the behavior control of the specific control unit can be compensated by the behavior control of the other control units, calculating a control parameter for the behavior control performed by the other control units so that the portion of the behavior control of the specific control unit can be compensated.

9. The verification apparatus of claim 1, comprising a plurality of sets of units (290, 300), each set of which is composed of the acquisition unit (294, 304) and the verification unit (292, 302), the plurality of sets of units being mounted in the vehicle separately from each other.

10. The verification apparatus of claim 9, wherein at least two sets of the plurality of sets of units (290, 300) are powered from redundant power source systems (310, 312) mounted in the vehicle and are formed to communicate through redundant communication systems (320, 322) mounted in the vehicle.

11. The verification apparatus of claim 9, wherein each of the plural verification units (292, 302) includes majority-vote determination means (296, 306) that uses results of the verification made by the plural verification units including itself and results of verification made by at least one of the control units to verify correctness of the behavior control performed by each of the plural verification units and the control units.

12. The verification apparatus (100, 290, 300) of claim 1, wherein the verification unit includes:
determination means (280) for determining that the behavior of the vehicle is abnormal and the behavior control performed by the control units is normal, and
adjustment means (280) for adjusting the behavior control of the control units based on a priority order for the behavior control of the control units so that abnormality of the behavior of the vehicle is mitigated.

13. The verification apparatus (100, 290, 300) of claim 12, wherein the priority order includes an execution order or a priority order for controlled variables in performing the behavior control of the control units.

14. The verification apparatus (100, 290, 300) of claim 1, which is powered from a power source which is different from a further power source that powers the control units.

15. The verification apparatus (100, 290, 300) of claim 1, further comprising an interface unit (200) connected to a signal line different from a further signal line connected to the control units and formed to supply some of the behavior information to the acquisition unit (210, 294, 304).

16. The verification apparatus (100, 290, 300) of claim 1, wherein the verification unit (240, 292, 302) is composed of a processor different from processors composing the control units.

17. The verification apparatus (100, 290, 300) of claim 1, wherein the verification unit (240, 292, 302) uses an algorithm for estimating an amount of the behavior of the vehicle based on the behavior information and the control units use a further algorithm for calculating an amount of the behavior control given to the controlled objects, the further algorithm being different from the algorithm used by the verification unit.

18. The verification apparatus (10) of claim 1, wherein the functional domains include domains of battery control, steering control, brake control, body control and navigation control of the vehicle, which are controlled by a battery control unit (20), a steering control unit (30), a brake control unit (40), a body control unit (50), and a navigation control unit (60) mounted in the vehicle, respectively.

19. A control system (10) for a vehicle provided with a plurality of controlled objects, comprising: a plurality of control units (20, 30, 40, 50, 60) that are associated with respectively different functional domains and are adapted to control behaviors of the controlled objects with respect to the respectively associated functional domains, and a verification apparatus (100, 290, 300) according to claim 1.

## Patentansprüche

1. Eine Prüfvorrichtung (100, 290, 300), angeordnet in einem Fahrzeug, welches mit einer Mehrzahl von gesteuerten Objekten und einer Mehrzahl von Steuereinheiten (20, 30, 40, 50, 60) versehen ist, wobei die Steuereinheiten entsprechenden unterschiedlichen funktionellen Gebieten zugeordnet sind und das Verhalten der gesteuerten Objekte bezüglich der jeweiligen zugehörigen funktionellen Gebiete zu steuern vermögen, wobei die Vorrichtung aufweist:
eine Erlangungseinheit (210, 294, 304), welche eine Verhaltensinformation zu erlangen vermag, welche das momentane Verhalten des Fahrzeugs anzeigt; und
eine Prüfeinheit (240, 292, 302), welche die Verhaltensinformation verwendet, um die Korrektheit der Verhaltenssteuerung der gesteuerten Objekte, durchgeführt durch die Steuereinheiten, zu überprüfen, **dadurch gekennzeichnet, dass**
die Mehrzahl von Steuereinheiten eine erste Steuereinheit (30, 40), welche eine höhere Sicherheit bei der Steuerung eines Verhaltens des Fahrzeugs benötigt und eine zweite Steuereinheit (50, 60) beinhalten, welche eine geringere Sicherheit bei der Steuerung eines Verhaltens des Fahrzeugs akzeptiert, wobei die Vorrichtung weiterhin aufweist:
Speichermittel (230), welche eine Information speichern, welche den ersten und zweiten Steuereinheiten gemeinsam ist; und
Begrenzungsmittel (220), welche die zweite Steuereinheit (50, 60) daran hindern, die gemeinsame Information in die Speichermittel zu schreiben.

2. Die Prüfvorrichtung (100, 290, 300) nach Anspruch 1, wobei die Prüfeinheit (240, 292, 302) die Korrektheit der Verhaltenssteuerung prüft, welche von den Steuereinheiten auf eines der gesteuerten Objekte gerichtet ist.

3. Die Prüfvorrichtung (100, 290, 300) nach Anspruch 1, wobei die Prüfeinheit (240, 292, 302) beinhaltet:
Abfrageerlangungsmittel (250) zum Erlangen einer Verhaltensabfrage für das Fahrzeug,
Verhaltensschätzmittel (252) zum Abschätzen eines Verhaltens des Fahrzeugs auf der Grundlage der Verhaltensabfrage,
Ist-Verhaltenerkennungsmittel (256) zur Erkennung eines Ist-Verhaltens des Fahrzeugs, und
Bestimmungsmittel (256) zur Bestimmung, ob oder ob nicht das Verhalten des Fahrzeugs anormal ist, indem ein Vergleich zwischen dem geschätzten Verhalten des Fahrzeugs und dem erkannten Ist-Verhalten des Fahrzeugs gemacht wird.

4. Die Prüfvorrichtung (100, 290, 300) nach Anspruch 3, wobei die Verhaltensschätzmittel (252) das Verhalten des Fahrzeugs auf der Grundlage eines physikalischen Modells schätzen, welches ein physikalisches Modell des Fahrzeugs ist.

5. Die Prüfvorrichtung (100, 290, 300) nach Anspruch 3, wobei die Verhaltensschätzmittel (252) das Verhalten des Fahrzeugs auf der Grundlage einer Datenbank schätzen, welche ein anormales Verhaltensmuster des Fahrzeugs darstellt.

6. Die Prüfvorrichtung (100, 290, 300) nach Anspruch 3, wobei die Prüfeinheit (240, 292, 302) beinhaltet:
Schätzmittel (260) um, wenn von dem Bestimmungsmittel (256) bestimmt wird, dass das Verhalten des Fahrzeugs anormal ist, auf der Grundlage einer Differenz zwischen dem geschätzten Verhalten des Fahrzeugs von dem Verhaltensschätzmittel (252) und dem erkannten Ist-Verhalten des Fahrzeugs von dem Ist-Verhaltenerkennungsmittel (254) eine Verhaltenssteuerung einer bestimmten Steuereinheit aus der Mehrzahl von Steuereinheiten zu schätzen, bei der die Möglichkeit vorliegt, dass sie eine Anomalie im Verhalten des Fahrzeugs verursacht; und
Blockiermittel (264) zum Blockieren der Verhaltenssteuerung der bestimmten Steuereinheit.

7. Die Prüfvorrichtung (100, 290, 300) nach Anspruch 6, wobei die Prüfeinheit (240, 292, 302) beinhaltet:
Spezifizierungsmittel (262), um, wenn von den Bestimmungsmitteln (256) bestimmt wird, dass das Verhalten des Fahrzeugs anormal ist, einen Abschnitt der Verhaltenssteuerung der bestimmten Steuereinheit zu spezifizieren, wobei bei dem Abschnitt die Wahrscheinlichkeit besteht, dass die Anomalie im Verhalten des Fahrzeugs erzeugt hat, indem ein Vergleich zwischen einem Verhaltenssteuerwert für ein gesteuertes Objekt, gesteuert von der bestimmten Steuereinheit und einem Verhaltenswert des gesteuerten Objektes entsprechend hierzu gemacht wird, und
die Blockiermittel (264) den Abschnitt der Verhaltenssteuerung der bestimmten Steuereinheit blockieren und, mit der Ausnahme des Abschnitts, die blockierte Verhaltenssteuerung der bestimmten Steuereinheit wiederherstellen.

8. Die Prüfvorrichtung (100, 290, 300) nach Anspruch 7, wobei die Prüfeinheit (240, 292, 302) weiterhin aufweist:
Steuerbarkeitsbestimmungsmittel (270) zur Bestimmung, ob oder ob nicht der durch die Blockierungsmittel (264) blockierte Abschnitt der Verhaltenssteuerung der bestimmten Steuereinheit durch die Verhaltenssteuerung der anderen Steuereinheiten kompensiert werden kann, und
Parameterberechnungsmittel (272), um, wenn von den Steuerbarkeitsbestimmungsmitteln (270) bestimmt wird, dass der blockierte Abschnitt der Verhaltenssteuerung der bestimmten Steuereinheit von der Verhaltenssteuerung der anderen Steuereinheiten kompensiert werden kann, einen Steuerparameter für die Verhaltenssteuerung zu berechnen, welche von den anderen Steuereinheiten durchgeführt wird, sodass der Abschnitt der Verhaltenssteuerung der bestimmten Steuereinheit kompensiert werden kann.

9. Die Prüfvorrichtung nach Anspruch 1, aufweisend eine Mehrzahl von Sätzen von Einheiten (290, 300), wobei jeder Satz hiervon zusammengesetzt ist aus der Erlangungseinheit (294, 304) und der Prüfeinheit (292, 302), wobei die Mehrzahl von Sätzen von Einheiten separat voneinander in dem Fahrzeug angeordnet sind.

10. Die Prüfvorrichtung nach Anspruch 9, wobei wenigstens zwei Sätze einer Mehrzahl von Sätzen von Einheiten (290, 300) von redundanten Energieversorgungssystemen (310, 312) gespeist werden, welche in dem Fahrzeug angeordnet sind und so ausgebildet sind, dass sie über redundante Kommunikationssysteme (320, 322) in Verbindung stehen, welche in dem Fahrzeug angeordnet sind.

11. Die Prüfvorrichtung nach Anspruch 9, wobei jede aus der Mehrzahl von Prüfeinheiten (292, 302) Mehrheitsbeschlussbestimmungsmittel (296, 306) beinhaltet, welche Prüfergebnisse, gemacht von der Mehrzahl von Prüfeinheiten, einschließlich sich selbst, und Prüfergebnisse verwenden, gemacht von wenigstens einer der Steuereinheiten, um die Korrektheit der Verhaltenssteuerung zu überprüfen, welche von jeder der Mehrzahl von Prüfeinheiten und der Steuereinheiten durchgeführt wird.

12. Die Prüfvorrichtung (100, 290, 300) nach Anspruch 1, wobei die Prüfeinheit aufweist:
Bestimmungsmittel (280) zur Bestimmung, dass das Verhalten des Fahrzeugs anormal ist und dass die Verhaltenssteuerung, die von den Steuereinheiten durchgeführt wird, normal ist, und
Einstellmittel (280) zur Einstellung der Verhaltenssteuerung der Steuereinheiten auf der Grundlage einer Prioritätsreihenfolge für die Verhaltenssteuerung der Steuereinheiten, sodass die Anormalität des Fahrzeugverhaltens abgemildert wird.

13. Die Prüfvorrichtung (100, 290, 300) nach Anspruch 12, wobei die Prioritätsreihenfolge eine Durchführungsreihenfolge oder eine Prioritätsreihenfolge für gesteuerte Variablen bei der Durchführung der Verhaltenssteuerung der Steuereinheiten beinhaltet.

14. Die Prüfvorrichtung (100, 290, 300) nach Anspruch 1, welche von einer Energieversorgung gespeist wird, die sich von einer weiteren Energieversorgung unterscheidet, welche die Steuereinheiten speist.

15. Die Prüfvorrichtung (100, 290, 300) nach Anspruch 1, weiterhin aufweisend eine Schnittstelleneinheit (200), die mit einer Signalleitung verbunden ist, die unterschiedlich zu einer weiteren Signalleitung ist, welche mit den Steuereinheiten verbunden ist und so ausgebildet ist, dass sie einen Teil der Verhaltensinformation an die Erlangungseinheit (210, 294, 304) liefert.

16. Die Prüfvorrichtung (100, 290, 300) nach Anspruch 1, wobei die Prüfeinheit (240, 292, 302) aus einem Prozessor besteht, der unterschiedlich zu Prozessoren ist, welche die Steuereinheiten binden.

17. Die Prüfvorrichtung (100, 290, 300) nach Anspruch 1, wobei die Prüfeinheit (240, 292, 302) einen Algorithmus verwendet, um den Betrag des Verhaltens des Fahrzeugs auf der Grundlage der Verhaltensinformation abzuschätzen und die Steuereinheiten einen weiteren Algorithmus verwenden, um einen Betrag der Verhaltenssteuerung zu berechnen, welche an die gesteuerten Objekte angewendet wird, wobei der weitere Algorithmus unterschiedlich zu dem Algorithmus ist, der von der Prüfeinheit verwendet wird.

18. Die Prüfvorrichtung (10) nach Anspruch 1, wobei die funktionellen Gebiete Gebiete der Batteriesteuerung, Lenkungssteuerung, Bremsensteuerung, Karosseriesteuerung und Navigationssteuerung des Fahrzeugs beinhalten, welche gesteuert werden von einer Batteriesteuereinheit (20), einer Lenksteuereinheit (30), einer Bremsensteuereinheit (40), einer Karosseriesteuereinheit (50) und einer Navigationssteuereinheit (60) welche entsprechend in dem Fahrzeug angeordnet sind.

19. Ein Steuersystem (10) für ein Fahrzeug, welches mit einer Mehrzahl von gesteuerten Objekten versehen ist, aufweisend:
eine Mehrzahl von Steuereinheiten (20, 30, 40, 50, 60), welche entsprechend unterschiedlichen funktionellen Gebieten zugewiesen sind und das Verhalten der gesteuerten Objekte bezüglich der entsprechend zugeordneten funktionellen Gebiete zu steuern vermögen, und
eine Prüfvorrichtung (100, 290, 300) nach Anspruch 1.

## Revendications

1. Appareil de vérification (100, 290, 300) monté dans un véhicule doté d'une pluralité d'objets commandés et d'une pluralité d'unités de commande (20, 30, 40, 50, 60), les unités de commande étant associées à des domaines fonctionnels respectivement différents et étant adaptés à commander les comportements des objets commandés relativement aux domaines fonctionnels respectivement associés, l'appareil comprenant :
une unité d'acquisition (210, 294, 304) qui acquiert des informations de comportement indicatives d'un comportement en cours du véhicule ; et
une unité de vérification (240, 292, 302) qui utilise les informations de comportement en vue de vérifier l'exactitude de commande de comportement pour les objets commandés mis en oeuvre par les unités de commande ;
**caractérisé en ce que**
la pluralité d'unités de commande inclut une première unité de commande (30, 40) qui nécessite une sécurité plus élevée dans la commande d'un comportement du véhicule et une seconde unité de commande (50, 60) qui accepte une sécurité plus faible dans la commande d'un comportement du véhicule, l'appareil comprenant en outre :
un moyen de stockage (230) qui stocke des informations communes aux première et seconde unités de commande ; et
un moyen de limitation (220) qui empêche la seconde unité de commande (50, 60) d'écrire les informations communes dans le moyen de stockage.

2. Appareil de vérification (100, 290, 300) selon la revendication 1, dans lequel l'unité de vérification (240, 292, 302) vérifie l'exactitude de la commande de comportement dirigée vers l'un des objets commandés à partir des unités de commande.

3. Appareil de vérification (100, 290, 300) selon la revendication 1, dans lequel l'unité de vérification (240, 292, 302) inclut :
un moyen d'acquisition de demande (250) pour acquérir une demande de comportement pour le véhicule ;
un moyen d'estimation de comportement (252) pour estimer un comportement du véhicule sur la base de la demande de comportement ;
un moyen de détection de comportement en cours (256) pour détecter un comportement en cours du véhicule ; et
un moyen de détermination (256) pour déterminer si le comportement du véhicule est anormal ou non en faisant une comparaison entre le comportement estimé du véhicule et le comportement en cours détecté du véhicule.

4. Appareil de vérification (100, 290, 300) selon la revendication 3, dans lequel le moyen d'estimation de comportement (252) estime le comportement du véhicule sur la base d'un modèle physique qui modélise physiquement le véhicule.

5. Appareil de vérification (100, 290, 300) selon la revendication 3, dans lequel le moyen d'estimation de comportement (252) estime le comportement du véhicule sur la base d'une base de données représentant un motif anormal du comportement du véhicule.

6. Appareil de vérification (100, 290, 300) selon la revendication 3, dans lequel l'unité de vérification (240, 292, 302) inclut :
un moyen d'estimation (260) pour, lorsqu'il est déterminé, par le moyen de détermination (256), que le comportement du véhicule est anormal, estimer une commande de comportement d'une unité de commande spécifique de la pluralité d'unités de commande qui est susceptible d'occasionner une anomalie dans le comportement du véhicule, sur la base d'une différence entre le comportement estimé du véhicule, estimé à partir du moyen d'estimation de comportement (252) et le comportement en cours détecté du véhicule, détecté à partir du moyen de détection de comportement en cours (254) ; et
un moyen de blocage (264) pour bloquer la commande de comportement de l'unité de commande spécifique.

7. Appareil de vérification (100, 290, 300) selon la revendication 6, dans lequel
l'unité de vérification (240, 292, 302) inclut
un moyen de spécification (262) pour, lorsqu'il est déterminé, par le moyen de détermination (256), que le comportement du véhicule est anormal, spécifier une partie de la commande de comportement de l'unité de commande spécifique, la partie étant susceptible d'avoir occasionné l'anomalie dans le comportement du véhicule, en faisant une comparaison entre une valeur de commande de comportement pour un objet commandé, lequel est commandé par l'unité de commande spécifique, et une valeur de comportement connexe de l'objet commandé ; et
le moyen de blocage (264) bloque la partie de la commande de comportement de l'unité de commande spécifique, et restaure, à l'exception de la partie, la commande de comportement bloquée de l'unité de commande spécifique.

8. Appareil de vérification (100, 290, 300) selon la revendication 7, dans lequel l'unité de vérification (240, 292, 302) inclut en outre :
un moyen de détermination de contrôlabilité (270) pour déterminer si la partie de la commande de comportement de l'unité de commande spécifique, bloquée par le moyen de blocage (264), peut ou non être compensée par la commande de comportement d'autres unités de commande ; et
un moyen de calcul de paramètres (272) pour, lorsqu'il est déterminé par le moyen de détermination de contrôlabilité (270) que la partie bloquée de la commande de comportement de l'unité de commande spécifique peut être compensée par la commande de comportement des autres unités de commande, calculer un paramètre de commande pour la commande de comportement mise en oeuvre par les autres unités de commande, de sorte que la partie de la commande de comportement de l'unité de commande spécifique peut être compensée.

9. Appareil de vérification selon la revendication 1, comprenant une pluralité d'ensembles d'unités (290, 300), dont chaque ensemble est composé de l'unité d'acquisition (294, 304) et de l'unité de vérification (292, 302), la pluralité d'ensembles d'unités étant montée sur le véhicule séparément les uns des autres.

10. Appareil de vérification selon la revendication 9, dans lequel au moins deux ensembles de la pluralité d'ensembles d'unités (290, 300) sont alimentés à partir de systèmes de source d'alimentation redondants (310, 312) montés dans le véhicule et sont formés de manière à communiquer par le biais de systèmes de communication redondants (320, 322) montés dans le véhicule.

11. Appareil de vérification selon la revendication 9, dans lequel chacune de la pluralité d'unités de vérification (292, 302) inclut un moyen de détermination de vote à la majorité (296, 306) qui utilise les résultats de la vérification effectuée par la pluralité d'unités de vérification, y compris elle-même, et les résultats de la vérification effectuée par au moins l'une des unités de commande, en vue de vérifier l'exactitude de la commande de comportement mise en oeuvre par chacune de la pluralité d'unités de vérification et des unités de commande.

12. Appareil de vérification (100, 290, 300) selon la revendication 1, dans lequel l'unité de vérification inclut :
un moyen de détermination (280) pour déterminer que le comportement du véhicule est anormal et que la commande de comportement mise en oeuvre par les unités de commande est normale ; et
un moyen de réglage (280) pour régler la commande de comportement des unités de commande sur la base d'un ordre de priorité pour la commande de comportement des unités de commande de sorte que l'anomalie comportementale du véhicule est atténuée.

13. Appareil de vérification (100, 290, 300) selon la revendication 12, dans lequel l'ordre de priorité inclut un ordre d'exécution ou un ordre de priorité pour des variables commandées dans la mise en oeuvre de la commande de comportement des unités de commande.

14. Appareil de vérification (100, 290, 300) selon la revendication 1, lequel est alimenté à partir d'une source d'alimentation qui est différente d'une source d'alimentation supplémentaire qui alimente les unités de commande.

15. Appareil de vérification (100, 290, 300) selon la revendication 1, comprenant en outre une unité d'interface (200) connectée à une ligne de signal différente d'une ligne de signal supplémentaire connectée aux unités de commande, et formée de manière à fournir une partie des informations de comportement à l'unité d'acquisition (210, 294, 304).

16. Appareil de vérification (100, 290, 300) selon la revendication 1, dans lequel l'unité de vérification (240, 292, 302) est composée d'un processeur différent des processeurs composant les unités de commande.

17. Appareil de vérification (100, 290, 300) selon la revendication 1, dans lequel l'unité de vérification (240, 292, 302) utilise un algorithme pour estimer une quantité du comportement du véhicule sur la base des informations de comportement, et les unités de commande utilisent un algorithme supplémentaire pour calculer une quantité de la commande de comportement donnée aux objets commandés, l'algorithme supplémentaire étant différent de l'algorithme utilisé par l'unité de vérification.

18. Appareil de vérification (10) selon la revendication 1, dans lequel les domaines fonctionnels incluent des domaines de commande de batterie, de commande de direction, de commande de freins, de commande de carrosserie et de commande de navigation du véhicule, lesquels sont commandés par une unité de commande de batterie (20), une unité de commande de direction (30), une unité de commande de freins (40), une unité de commande de carrosserie (50), et une unité de commande de navigation (60), montées dans le véhicule, respectivement.

19. Système de commande (10) pour un véhicule doté d'une pluralité d'objets commandés, comprenant :
une pluralité d'unités de commande (20, 30, 40, 50, 60) qui sont associées à des domaines fonctionnels respectivement différents et sont adaptés pour commander les comportements des objets commandés relativement aux domaines fonctionnels respectivement associés ; et
un appareil de vérification (100, 290, 300) selon la revendication 1.
